# EUROPEAN PATENT APPLICATION

(11) **EP 1 416 704 A1**
(43) Date of publication of application: **06.05.2004**
(21) Application number: 01954450.1
(22) Date of filing: 06.08.2001
(51) Int. Cl.: H04M 11/00

(54) **TALKING APPARATUS ADAPTOR; CIRCUIT CONNECTION METHOD; CIRCUIT CONNECTION PROGRAM; AND RECORDED MEDIUM**

(71) Applicant: MITSUBISHI DENKI KABUSHIKI KAISHA, Tokyo 100-8310 (JP)
(72) Inventor: EBISAWA, Hideaki Mitsubishi Denki Kabushiki K., Tokyo 100-8310 (JP); MIYAUCHI, Nobubito Mitsubishi Denki Kabushiki K., Tokyo 100-8310 (JP); NAITO, Akihiko c/o Mitsubishi Denki Kabushiki K., Tokyo 100-8310 (JP)
(74) Representative: Pfenning, Meinig & Partner
(86) International application number: PCT/JP2001/006725
(87) International publication number: WO 2003/015387

(57) **Abstract**

An internet telephone adapter connected to a conventional telephone has a problem of being incapable of switching over to a public line for conventional telephoning in case of internet telephoning unavailable.

With a talking equipment adapter connected to a public line and an IP network, a public line signal transmitting and receiving section 1100 receives call information and a phone number from a telephone set 10, and a connected party determining section 200 obtains an IP address corresponding to the phone number, generates route selection information, and transfers the route selection information to a line connection switching section 100. The line connection switching section 100 selects a route by way of a public line 13 or a route from an IP network communication processing section 5000 to an IP network 14 so as to transmit the call information to a telephone set 20.

## Description

### Technical Field

This invention relates to a talking equipment adapter for allowing a phone conversation by way of a public line or an IP network by connecting itself to a telephone set as an example of talking equipment, and connecting itself to the IP network as a digital communication line and the public line as an analog communication line. In addition, this invention relates to a talking equipment adapter having the function of obtaining receiving party's address information in the case of the receiving party's address information unknown.

### Background Art

In recent days, internet telephoning for transmitting and receiving IP (Internet Protocol) packet based voice data over the Internet as a computer network or an intranet is becoming more and more popular in replace of current public line based telephoning. Voice over Internet Protocol (hereinafter referred to as VoIP) is an art called for implementing it.

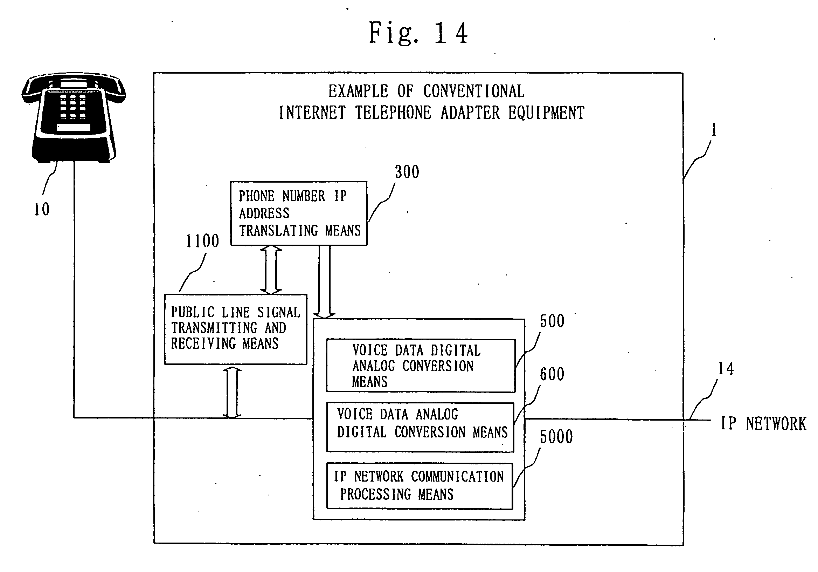

Gateway equipment installed between a network route and a telephone set is a device generally known for implementing the internet telephoning (a description is given of a gateway apparatus in *NIKKEI COMMUNICATION*; February 1, 1999; pages 126-133). The gateway equipment includes a wide range of devices from a large scale device supporting multiple telephone lines and a small scale device like a telephone adapter for simply connecting a current telephone set to a network. Fig. 14 shows a conventional internet telephone adapter apparatus which is a VoIP adapter such as VolaLink-TA of NTT (http://www.ntt-east.co.jp/release/9912/991216.html) or Solphone of Soliton Systems Inc. (http://www.soliton.co.jp/product/soliton/solphone/solphone.html) (Solphone Product Catalog). The internet telephone adapter apparatus is consisted of a voice data digital analog conversion means 500, a voice data analog digital conversion means 600, an IP network communication processing means 5000, a phone number IP address translation means 300, and a public line signal transmitting and receiving means 1100. Then, the internet telephone adapter apparatus is connected to a telephone set 10 on one hand and an IP network on the other.

The operation thereof will be discussed.

From the telephone set 10, user's speaking voice data is transmitted to the telephone adapter apparatus as analog signal. The analog signal is converted into digital signal through the voice data analog digital conversion means 600, and then voice-encoded through the IP network communication processing means 5000 to be assembled as voice packet data, which is transmitted over the IP network. Thus, the user's speaking voice is transmitted over to the telephone set of the other party.

On the other hand, the user's speaking voice data of the receiving party is received in a voice packet transmitted over the IP network. The IP network communication processing means 5000 receives and disassembles it to extract a voice coded portion from it for voice decoding. In addition, the digital signal is converted into analog signal through the voice data digital analog conversion means 500, and transmitted to the telephone set 10 of the user. Hence, the other party' s speaking voice may be heard through the telephone set 10.

Furthermore, the phone number of the receiving party's telephone set, which is inputted from the telephone set 10, is to be translated to an IP address for identifying the phone number on the IP network. For example, information about a correspondence between the phone number and the IP address is stored prior to translation in the phone number IP address translation means 300. The phone number inputted from the telephone set is received by the public line signal transmitting and receiving means 1100, and the IP address corresponding to the phone number is obtained by the phone number IP address translation means 300. This allows the receiving party's telephone adapter to be specified directly for accessing over the IP network.

Firstly, with the conventional internet telephone adapter, the telephone set itself is connected directly to a public line for conventional telephoning, whereas the telephone adapter is connected to an IP network but not to a public line. This poses the problem of failing to make a public line based call from the telephone set by switching the line over to a public line in case that the internet telephone cannot be used while the line is connected to the telephone adapter.

It is an object of a preferred embodiment of this invention to allow telephoning by way of an IP network as a digital communication line or a public line as an analog communication line where appropriate while the signal line from the telephone set is connected thereto.

Secondly, according to the conventional internet telephone adapter, the IP address of a receiving party's telephone adapter is to be set and registered in its own telephone adapter prior to making an internet telephone over an IP network. This poses the problem of always obliging the user to spend time and effort for inputting the IP address.

It is an object of a preferred embodiment of this invention to allow the user to omit the previous work operation of checking the IP address of the other part's talking equipment adapter and setting it in the phone number IP address translation means of its own talking equipment adapter.

### Disclosure of the Invention

A talking equipment adapter according to this invention is connected to talking equipment, which receives call information for processing and connects a digital communication line for transmitting digital data and an analog communication line for transmitting analog data, in which the talking equipment adapter is characterized by controlling a use of one of the digital communication line and the analog communication line for transmitting the call information.

The talking equipment adapter is characterized by including:
a public line signal processing section, which receives the call information from the talking equipment at least,
a network communication processing section, which transmits the call information through the digital communication line,
a connected party determining section, which generates route selection information for selecting one of a route through the analog communication line and a route through the digital communication line, and
a line connection switching section, which receives the route selection information from the connected party determining section, and transmits the call information received from the public line signal processing section to one of the analog communication line and the network communication processing section based on the route selecting information.

The call information is characterized by including identification information for identifying a destination,
the network communication processing section is characterized by specifying address information for identifying the destination of the call information, and transmitting the call information through the digital communication line,
the talking equipment adapter is further characterized by including:
an address translation table, which stores the address information and the identification information which are made correspond to each other; and
an address translating section, which obtains the address information from the identification information with reference to the address translation table; and
the connected party determining section is characterized by generating the route selection information based on the address information in a case of having obtained the address information through the address translating section, and generating the route selection information based on the identification information in a case of failing to obtain the address information through the address translating section, and outputting the route selection information generated to the line connection switching section.

The connected party determining section is characterized by including an address learning section, which determines whether the destination of the call information can receive the call information through the digital communication line in the case of failing to obtain the address information through the address translating section, and updates the address translation table based on a determined result.

The public line signal processing section is characterized by including,
a DTMF signal generating section, which generates address verification information for obtaining the address information of the destination of the call information by using a Dual Tone Multi-Frequency (hereinafter referred to as "DTMF") signal, and
a DTMF signal detecting section, which receives a response to the address verification information transmitted from the DTMF signal generating section through the analog communication line as address response information using the DTMF signal, analyzes the address response information, and notifies the address learning section of an analyzed result, and
the address learning section is characterized by updating the address translation table based on details notified by the DTMF signal detecting section.

The DTMF signal generating section is characterized by transmitting the address information corresponding to the identification information of the talking equipment of a party transmitting the call information to a destination which the call information is transmitted to by using the DTMF signal.

The public line signal processing section is characterized by including a voice band modulating and demodulating section, which generates the address verification information for obtaining the address information of the destination of the call information by using a voice band data signal, and transmits it through the analog communication line, and also receives a response to the address verification information through the analog communication line as address response information using the voice band data signal, analyses the address response information, and notifies the address learning section of an analyzed result; and
the address learning section is characterized by updating the address translation table based on details notified by the voice band modulating and demodulating section.

The voice band modulating and demodulating section is characterized by transmitting the address information corresponding to the identification information of the talking equipment of the party transmitting the call information to the destination which the call information is transmitted to by using the voice band data signal.

A talking equipment adapter according to this invention is the talking equipment adapter which is connected to an analog communication line for transmitting analog data by using identification information for identifying a destination and a digital communication line for transmitting digital data by using address information for identifying a destination. The talking equipment adapter is characterized by including:
a public line signal processing section, which receives call information including the identification information and also transmits the analog data through the analog communication line;
a network communication processing section, which transmits the digital data through the digital communication line;
an address translation table, which stores the address information and the identification information which are made correspond to each other;
an address learning section, which obtains the address information of the destination by using the identification information included in the call information, and stores in the address translation table the address information obtained which is made correspond to the identification information:
   a connected party determining section, which generates route selection information for selecting one of a route by way of the analog communication line and a route by way of the digital communication line with reference to the address translation table; and
   a line connection switching section, which receives the route selection information from the connected party determining section, and outputs the call information to one of the network communication processing section and the network communication processing section based on the route selection information.

The public line signal processing section is characterized by generating address verification information for obtaining the address information of the destination of the call information and transmitting the address verification information through the analog communication line, and also receiving address response information including a response to the address verification information through the analog communication line, analyzing the address response information, and notifying the address learning section of an analyzed result, and
the address learning section is characterized by storing the analyzed result notified by the public line signal processing section in the address translation table.

The public line signal processing section is characterized by using one of a Dual Tone Multi-Frequency signal and a voice band data signal.

An adapter talking apparatus according to this invention is the adapter talking apparatus which is connected to an analog communication line for transmitting analog data by using identification information for identifying a destination and a digital communication line for transmitting digital data by using address information for identifying a destination. The adapter talking apparatus is characterized by including:
means for receiving call information including the identification information;
means for obtaining the address information corresponding to the identification information included in the call information through the analog communication line;
means for storing an obtained result of the analog information which is made correspond to the identification information in a storage area; and
means for selecting one of the digital communication line and the analog communication line with reference to the storage area and transmitting the call information.

The means for obtaining the address information is characterized by generating address verification information for obtaining address information by using a predetermined signal, and transmitting the address verification information generated.

A line connection method according to this invention is a line connection method for transmitting call information through one of an analog communication line for transmitting analog data by using identification information for identifying a destination and a digital communication line for transmitting digital data by using address information for identifying a destination. The line connection method is characterized by including:
receiving the call information including the identification information;
obtaining the address information corresponding to the identification information included in the call information through the analog communication line;
storing an obtained result of the analog information which is made correspond to the identification information in a storage area; and
selecting one of the digital communication line and the analog communication line with reference to the storage area and transmitting the call information.

A line connection program according to this invention is a line connection program for transmitting call information through one of an analog communication line for transmitting analog data by using identification information for identifying a destination and a digital communication line for transmitting digital data by using address information for identifying a destination. The line connection program is characterized by causing a computer to execute:
receiving process of the call information including the identification information;
obtaining process of the address information corresponding to the identification information included in the call information;
storing process of an obtained result of the analog information which is made correspond to the identification information in a storage area; and
selecting process of one of the digital communication line and the analog communication line with reference to the storage area for transmitting the call information.

A computer readable storage medium having a line connection program according to this invention recorded therein is a storage medium in which a line connection program for transmitting call information through one of an analog communication line for transmitting analog data by using identification information for identifying a destination and a digital communication line for transmitting digital data by using address information for identifying a destination is recorded. The computer readable storage medium is characterized by having the line connection program recorded therein causing a computer to execute:
receiving process of the call information including the identification information;
obtaining process of the address information corresponding to the identification information included in the call information;
storing process of an obtained result of the analog information which is made correspond to the identification information in a storage area; and
selecting process of one of the digital communication line and the analog communication line with reference to the storage area for transmitting the call information.

### Brief Description of Drawings

Fig. 1 is a diagram illustrating a network configuration of a talking equipment adapter according to a first embodiment;
Fig. 2 is a diagram illustrating an overview image of the talking equipment adapter according to the first embodiment;
Fig. 3 is a diagram illustrating a configuration of each means of the talking equipment adapter according to the first embodiment;
Fig. 4 is a flow chart illustrating an operation of the talking equipment adapter according to the first embodiment;
Fig. 5 is a flow chart illustrating an operation of the talking equipment adapter according to the first embodiment;
Fig. 6 is a flow chart illustrating an operation of the talking equipment adapter according to the first embodiment;
Fig. 7 is a flow chart illustrating an operation of the talking equipment adapter according to the first embodiment;
Fig. 8 is a diagram illustrating a learning function provided in a talking equipment adapter according to a second embodiment;
Fig. 9 is a diagram illustrating a configuration of each means of the talking equipment adapter according to the second embodiment;
Fig. 10 is a flow chart illustrating an operation of the talking equipment adapter according to the second embodiment;
Fig. 11 is a flow chart illustrating an operation of the talking equipment adapter according to the second embodiment;
Fig. 12 is a diagram illustrating a configuration of a public line signal transmitting and receiving section of a talking equipment adapter according to a third embodiment;
Fig. 13 is a diagram illustrating a configuration of a public line signal transmitting and receiving section according to a fourth embodiment; and
Fig. 14 is a diagram illustrating a configuration of a conventional internet telephone adapter apparatus.

### Best Mode for Carrying out the Invention

### Embodiment 1.

Hereinafter, one embodiment of the talking equipment adapter of this invention will be described with reference to the drawings.

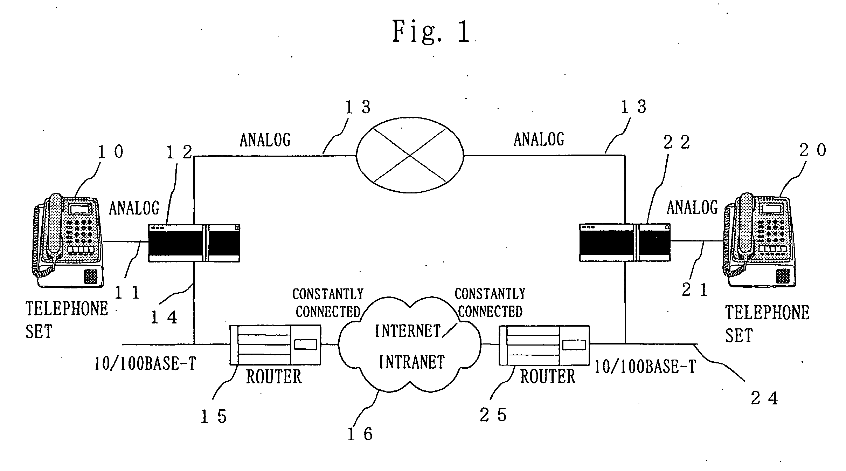

Fig. 1 is a diagram illustrating a network configuration of a network system using the talking equipment adapter according to the first embodiment.

Referring to Fig. 1, reference numerals 10 and 20 each denote a generally used telephone set as an example of talking equipment. Reference numerals 12 and 22 each denote a talking equipment adapter. A reference numeral 11 denotes an indoor telephone line, which connects the telephone set 10 and the talking equipment adapter 12. A reference numeral 21 denotes an indoor telephone line, which connects the telephone set 20 and the talking equipment adapter 22. A reference numeral 13 denotes a public line as an analog communication line. The public line 13 is a telephone line, for example. Those with reference numerals 14 and 24 connecting the talking equipment adapter 12 and the talking equipment adapter 22, respectively, each denote an internet protocol network (IP network) as a digital communication line. They connect the talking equipment adapter 12 and the talking equipment adapter 22. A reference numeral 16 denotes the Internet or an intranet. Reference numerals 15 and 25 are routers, which control between the IP network 14, 24 and the Internet or the intranet 16, respectively.

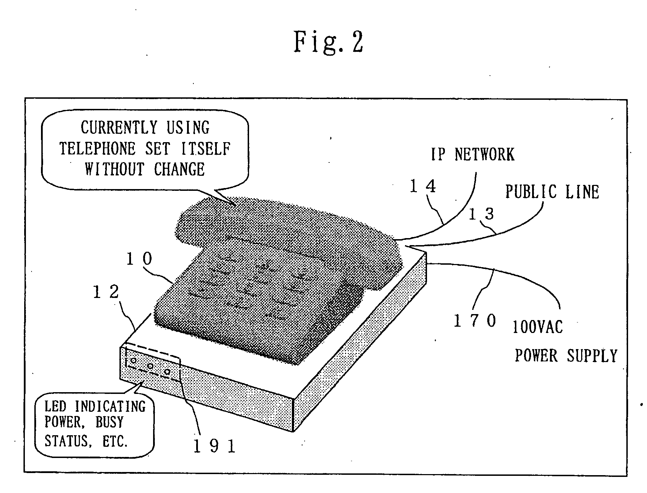

Fig. 2 is a diagram illustrating an overview image in which the talking equipment adapter 12 is connected to the telephone set 10. As shown in Fig. 1, the telephone set 10 and the talking equipment adapter 12 are connected via the indoor telephone line 11. The talking equipment adapter 12 is connected to the IP network 14, the public line 13 and a power strip 170. In addition, the talking equipment adapter 12 has an LED display section 191 for indicating power or busy status.

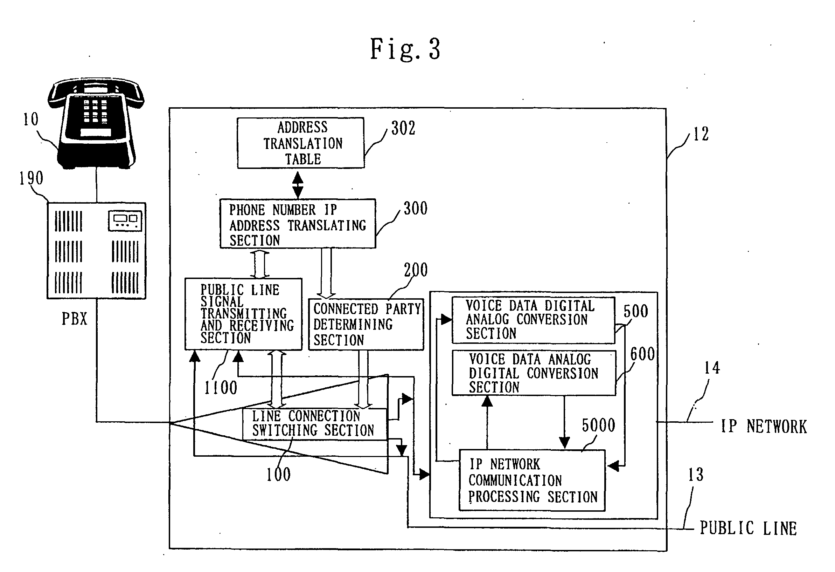

Fig. 3 is a diagram illustrating a configuration of the talking equipment adapter according to the first embodiment.

Referring to Fig. 3, a reference numeral 100 denotes a line connection switching section, which switches line connection (between the public line 13 and the IP network 14). A reference numeral 1100 denotes a public line signal transmitting and receiving section, which is a public line signal processing section capable of transmitting and receiving analog voice data as a type of call information to and from the telephone set 10 through the public line 13. A reference numeral 5000 denotes an IP network communication processing section, which is a network communication processing section capable of transmitting and receiving digital voice data as a type of call information over the IP network 14. A reference numeral 200 denotes a connected party determining section, which determines whether it is possible to transmit and receive call information to and from a telephone set connected to a talking equipment adapter of the same type over the IP network. A reference numeral 302 denotes an address translation table, which stores a phone number as a type of identification information and an internet protocol address (IP address) as address information for transmitting call information to the talking equipment of the other party over an IP network, the phone number and the IP address being made correspond to each other. A reference numeral 300 denotes a phone number IP address translating section, which is an address translating section capable of translating a phone number received from the telephone set 10 to an IP address with reference to the address translation table address translation table 302. A reference numeral 500 denotes a voice data digital analog conversion section, which is a digital analog converting section capable of converting digital voice data received over an IP network into analog voice data which is recognizable by the telephone set 10. A reference numeral 600 denotes a voice data analog digital conversion section, which is an analog digital converting section capable of converting analog voice data as call information received from the telephone set 10 into digital voice data which is to be transmitted over the IP network 14.

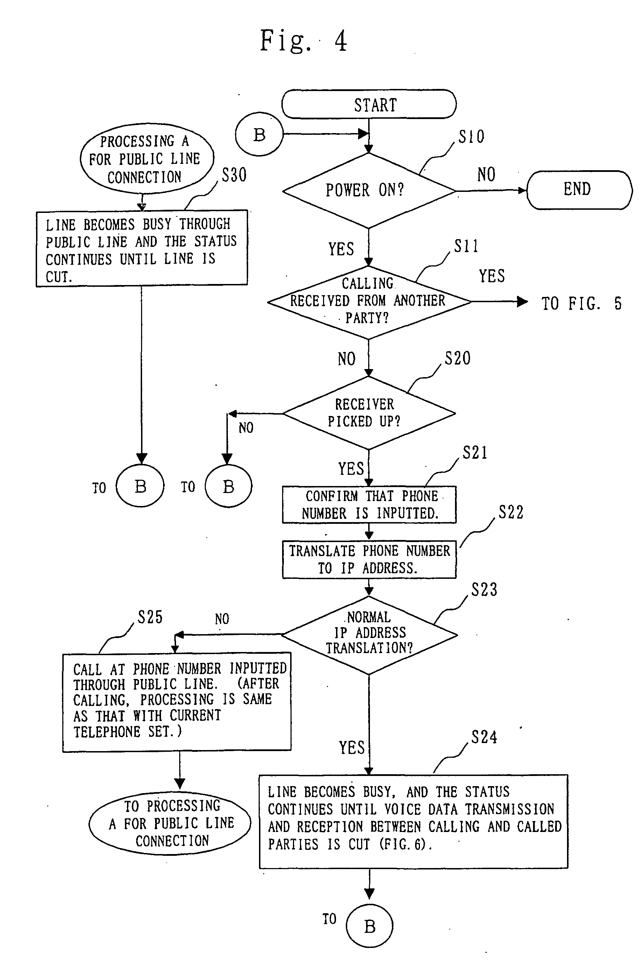

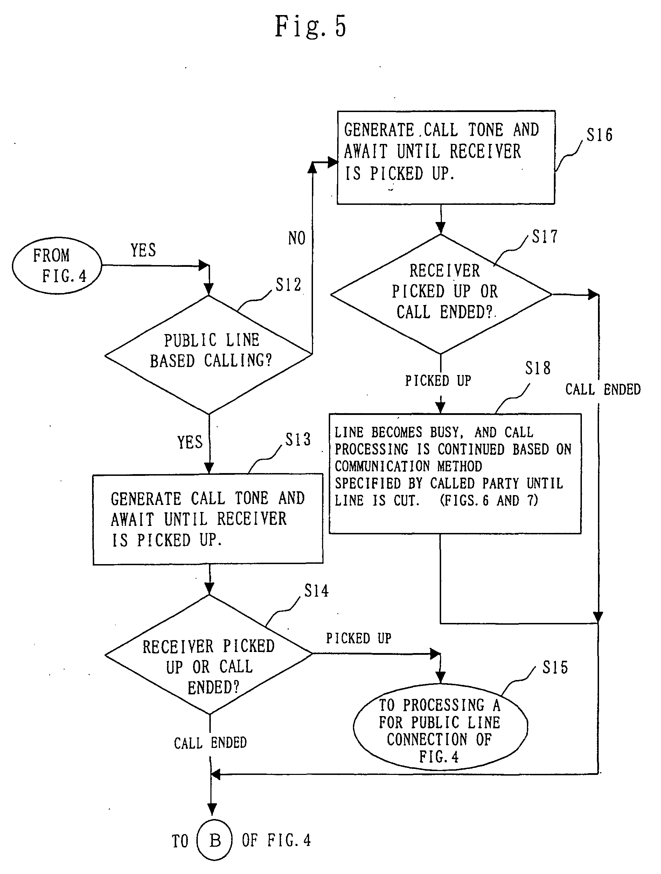

Now, an operation will be discussed with reference to the flow charts of Fig. 4 and Fig. 5. It is to be noted that a description will be given on the assumption that the telephone set 10 and the talking equipment adapter 12 of Fig. 1 are of a calling party, and the telephone set 20 and the talking equipment adapter 22 are of a receiving party for an easier explanation.

For a start, when the power to the talking equipment adapter 12 is turned ON (S10), the public line signal transmitting and receiving section 1100 and the IP network communication processing section 5000 examines whether a call has been received from a third party (S11). With a public line based call (S12), the public line signal transmitting and receiving section 1100 sends a call tone from the telephone set 20 received through the public line 13 directly to the telephone set 10, and then awaits until the receiver of the telephone set 10 is picked up (S13). When the receiver of the telephone set 10 is picked up or the calling from the telephone set 20 stops (S14), the process goes back to S10. In the case of the -receiver picked up (S14), the line becomes busy through the public line itself and the call is continued until the line is cut (S30). On the other hand, with an IP network based call, the public line signal transmitting and receiving section 1100 sends a call tone to the telephone set 10, and awaits until the receiver is picked up (S17). When the receiver is picked up, the line becomes busy over the IP network itself, and the call is continued until the line is cut (S18).

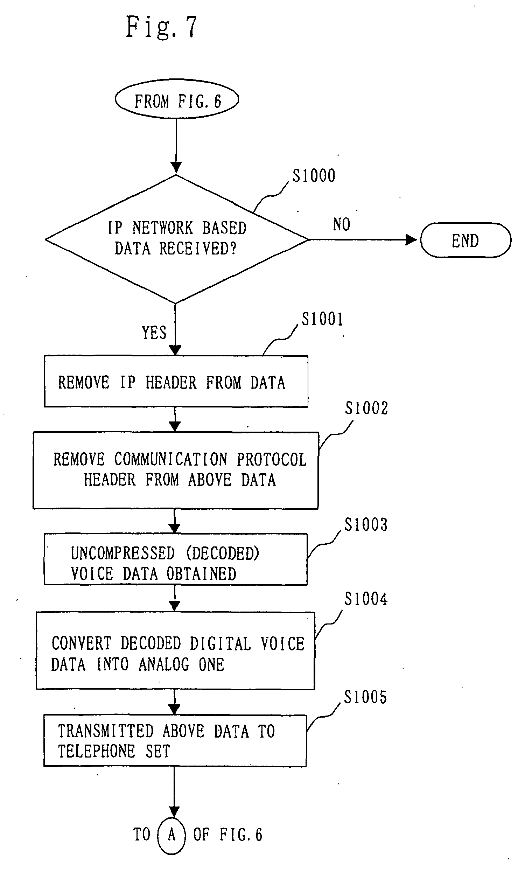

A detailed description will be given of the procedure of S18 with reference to the flow chart of Fig. 7.

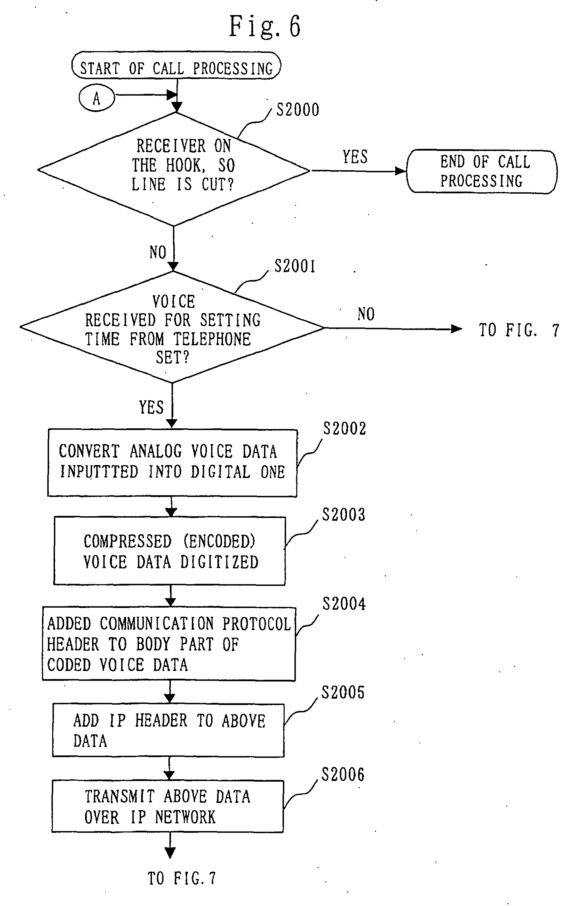

With referring to Fig. 7, in S1000, it is determined whether the IP network communication processing section 5000 has received data over the IP network 14. In the case of no data received, processing is ended. In the case of data received, an IP header is removed from the data received by the IP network communication processing section 5000 (S1001) (It is assumed that data (digital voice data) received over the IP network 14 is packet information.). Then, the IP network communication processing section 5000 further removes a communication protocol header from the data whose IP header has been removed (S1002). Then, the IP network communication processing section 5000 decompresses (decodes) digital voice data obtained (S1003). Subsequently, the voice data digital analog conversion section 500 converts the digital voice data decoded in S1003 into analog voice data (S1004). Then, the IP network communication processing section 5000 sends the analog voice data converted by the voice data digital analog conversion section 500 to the public line signal transmitting and receiving section 1100. The public line signal transmitting and receiving section 1100 sends the analog voice data received to the telephone set 10 (S1005). After the analog voice data is transmitted to the telephone set 10, processing goes back to S2000 of Fig. 6, which will be discussed later, and the call processing is continued in order to determine whether to make another call.

The state that the line becomes busy in S18 of Fig. 5 means to continue the processing that analog voice data from the telephone set 20 is converted into digital voice data by the voice data analog digital conversion section 600 provided in the talking equipment adapter 22 and transmitted over the IP network 24, and digital voice data received from the telephone set 20 over the Internet/intranet 16 is converted into analog voice data by the voice data digital analog conversion section 500 and transmitted to the telephone set 10 as shown in Fig. 6 and Fig. 7.

Now, the processing goes back to the start. In the case of no call received from a third party (S11), the public line signal transmitting and receiving section 1100 verifies whether the receiver of the telephone set 10 of its own has been picked up (S20). At this stage, if the receiver has not been picked up, the processing goes back to the start (S10). If the receiver has been picked up, however, the public line signal transmitting and receiving section 1100 sends a tone to the telephone set 10 indicating an allowable state of inputting a phone number, and then verifies that a phone number is inputted (S21). Then, the phone number IP address translating section 300 obtains the IP address of the telephone set 20 of the other party with referring to the address translation table based on the phone number inputted (S22). If the IP address is obtained correctly (S23), the connected party determining section 200 generates route selection information so that call information is transmitted and received over the IP network. The line connection switching section 100 starts the IP network communication processing section 5000. The IP network communication processing section 5000 sends a digital signal for calling the telephone set 20 of the other party. After the receiver is picked up, the line becomes busy, and the call is continued until the line is cut (S24).

A detailed description will be given of processing in S24 of Fig. 4 with reference to Fig. 6.

With referring to Fig. 6, in S2000, the IP network communication processing section 5000 verifies that the receiver of the telephone set 10 is replaced so that the line is cut. Subsequently, in S2001, it is verified that voice has been inputted for setting time from the telephone set 10. In the case of voice inputted for setting time, the voice data analog digital conversion section 600 converts analog vice data inputted into digital voice data (S2002). The IP network communication processing section 5000 collects voice data in a predetermined certain sampling time, converts the voice data collected within the sampling time from analog data into digital data, and transmits the digital voice data to the telephone set 20 of the other party. Converted digital voice data is transferred to the IP network communication processing section 5000 for voice data compression (encodation) (S2003). Then, the IP network communication processing section 5000 adds a communication protocol header to the body part of coded voice data (S2004), further adds an IP header to the data (S2005), and transmits generated data over the IP network 14 (S2006). Then, processing proceeds to the processing of S1000 of Fig. 7 in which it is verified that the call information is returned from the telephone set 20 over the IP network 24. The processing of Fig. 7 will not be discussed here because it has already been discussed in the detailed description of processing in S18 of Fig. 5.

If an IP address is not obtained correctly, the connected party determining section 200 generates route selection information so that call information is transmitted and received through a public line. The line connection switching section 100 switches the line connection over to the public line 13, and starts the public line signal transmitting and receiving section 1100. The public line signal transmitting and receiving section 1100 sends a call tone through the public line 13 to a telephone set corresponding to the phone number inputted from the telephone set 10 through the public line 13 (S25). After the other party picks up the receiver, the line becomes busy through the public line, and the call is continued until the line is cut (S30).

With reference to the flow chart of Fig. 4, processing to be carried out in the case where the receiver of the telephone set 20 of the other party is not picked up is omitted. In that case, however, the line is cut itself and the process goes back to the start (S10).

In addition, the talking equipment adapter according to the present invention may connect a telephone line from such as PBX (Private Branch Exchange) which is connected to a generally used telephone set (a dial phone, a push-button phone, etc.) to a public line network or an IP network. Even in the case of calling from the telephone set, it is determined whether it is connectable to the telephone set of the other party over the IP network. Then, an automatic switching may be performed based upon a determined result by the line connection switching section 100 for switching the line connection. Thus, IP network based calling is allowed whenever IP network based calling is available. When IP network based calling is not available, public line network based calling is allowed in such cases where the phone number cannot be translated into an IP address, the telephone set of the other party is not connected to an IP network, and the talking equipment adapter installed between the telephone set 20 and the IP network 24 is not compatible with the talking equipment adapter 12.

As described above, it is designed to use IP network based calling if the receiving party's telephone set is applicable to IP network based calling, and to use public line based calling to the contrary. Thus, both are switched automatically. As a result, the user, once installing the talking equipment adapter and a telephone set, is allowed to transmit and receive call information through a public line or an IP network where appropriate with no trouble.

Thus, according to the first embodiment, a description has been given of the talking equipment adapter which is characterized by having the line connection switching section 100, the public line signal transmitting and receiving section 1100 and the IP network communication processing section 5000. Specifically, the line connection switching section 100 is connected to a telephone line from a generally used telephone set (such as a dial phone and a push-button phone), a public line network and an internet protocol based network (hereinafter referred to as IP network). Then, the line connection switching section 100, when calling is made from the telephone set, switches connected lines based on a determined result whether the line is connectable over an IP network to the telephone set of the other party. The public line signal transmitting and receiving section 1100 can transmit and receive signals through a public line between the telephone sets. The IP network communication processing section 5000 can transmit and receive IP network signals over the IP network. The talking equipment adapter is also characterized by the fact that IP network based calling is allowed in the case of IP network based calling available and public line network based calling is allowed in case of not available.

In addition, a description has been given of the talking equipment adapter which is characterized with the connected party determining section 200, which determines whether IP network based calling is allowed between the telephone set connected to the talking equipment adapter and a telephone set connected to a talking equipment apparatus of the same type. Thereby, the talking equipment adapter is also characterized by achieving IP network based calling.

In addition, a description has been given of the talking equipment adapter which is characterized with the phone number IP address translating section 300. Specifically, the phone number IP address translating section 300 converts a public line based phone number automatically to an internet protocol address (hereinafter referred to as IP address) in the case where it is determined by inputting the public line based phone number of another telephone set connected to a talking equipment adapter of the same type to the telephone set connected to the telephone equipment adapter that IP network based calling is allowed. Thereby, the talking equipment adapter is also characterized that the user is allowed to use current phone numbers themselves without change for IP network based calling.

Still more, a description has been given of the talking equipment adapter which is characterized with the voice data digital analog conversion section 500 and the voice data analog digital conversion section voice data analog digital conversion section 600. Specifically, the voice data digital analog conversion section 500 converts digital voice data from an IP network into a voice analog signal to be sent to the telephone set 10 so that voice calling may be achieved between the telephone set connected to the talking equipment adapter and the telephone set 10 connected over the IP network. The voice data analog digital conversion section 600 converts a voice analog signal from the telephone set 10 into digital voice data to be transmitted over the IP network. Thereby, the talking equipment adapter is also characterized by achieving IP network based calling through bydirectional conversion made between digital voice data and voice analog signals..

### Embodiment 2.

According to a second embodiment, a description will be given of the processing that the connected party determining section 200 as the determining section of the connected party asks the telephone set of the receiving party to send an IP address if the IP address has not been set in the address translation table 302, and then registers the IP address transmitted from the receiving party in the address translation table 302 of the talking equipment adapter of its own telephone set.

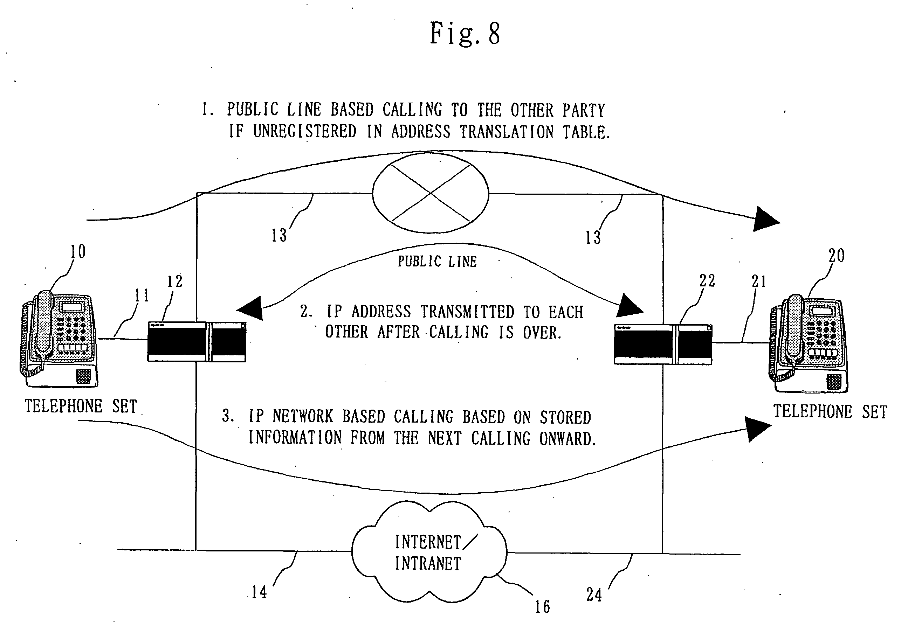

Fig. 8 is a diagram illustrating a connection learning function provided in the connected party determining section 200 according to the second embodiment.

Fig. 8 shows the case where calling is made from the telephone set 10 to the telephone set 20. However, in case that an IP address corresponding to the phone number of the telephone set 20 is not registered in the address translation table 302 of the talking equipment adapter 12, the connected party determining section 200 is provided with a learning function for obtaining the other party's IP address through procedures 1, 2 and 3 below.
1. With the other party who is not registered in the address translation table 302, public line based calling is applied.
2. When the calling is over, an IP address is transmitted to each other. The IP address received is registered in the address translation table 302.
3. From the next calling onward, IP network based calling is applied with the IP address stored in the address translation table 302.

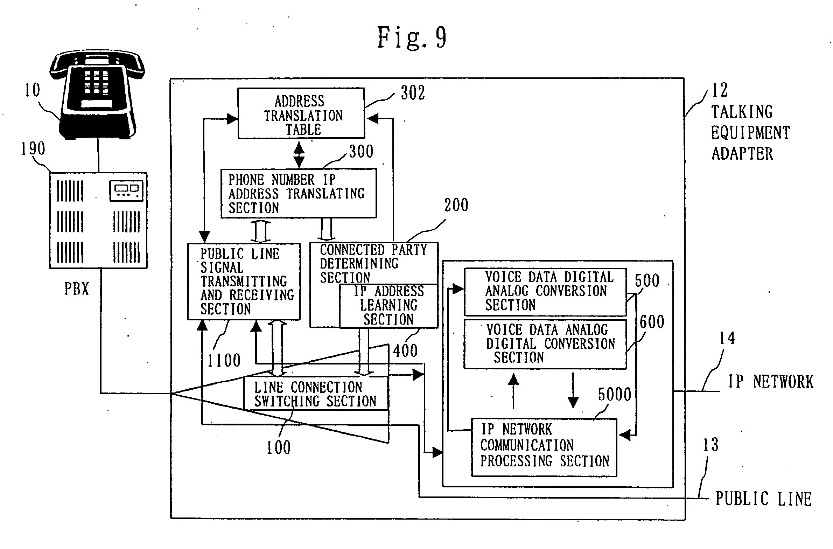

Fig. 9 is a diagram illustrating the configuration of each component means showing a talking equipment adapter of this invention.

Referring to Fig. 9, the public line signal transmitting and receiving section 1100 is a public line signal processing section, which makes a public line based call and mutually transmits IP address information when the line is cut. A reference numeral 400 denotes an IP address learning section, which is an address learning section provided in the connected party determining section 200. The IP address learning section IP address learning section 400 instructs the public line signal transmitting and receiving section 1100 to obtain an IP address corresponding to the current public line based phone number from a talking equipment adapter connected to the telephone set of the receiving party. Other components are the same as those of Fig. 3, which omits the explanation thereof.

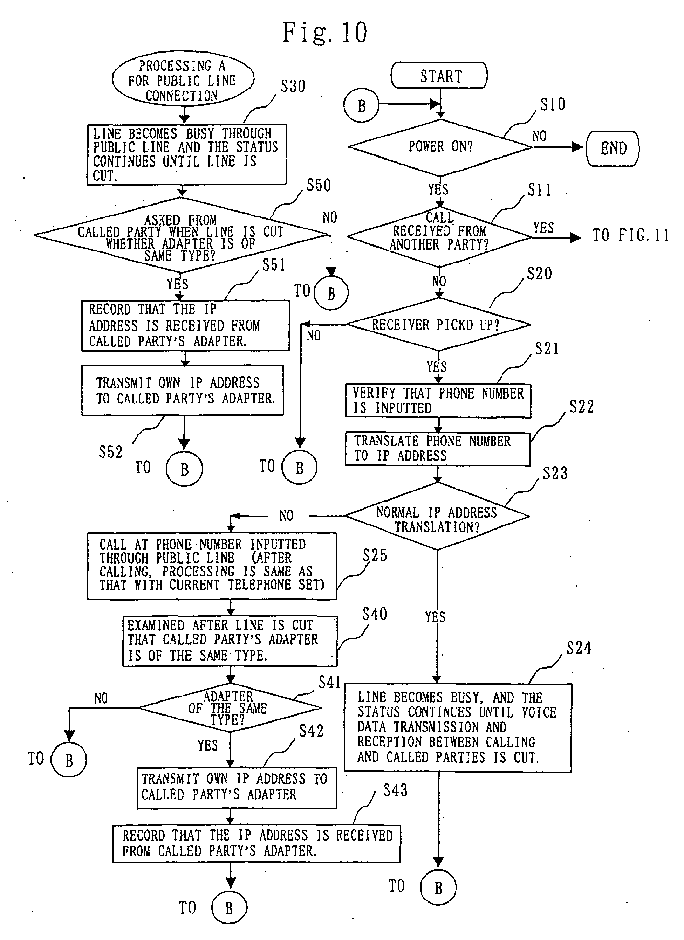

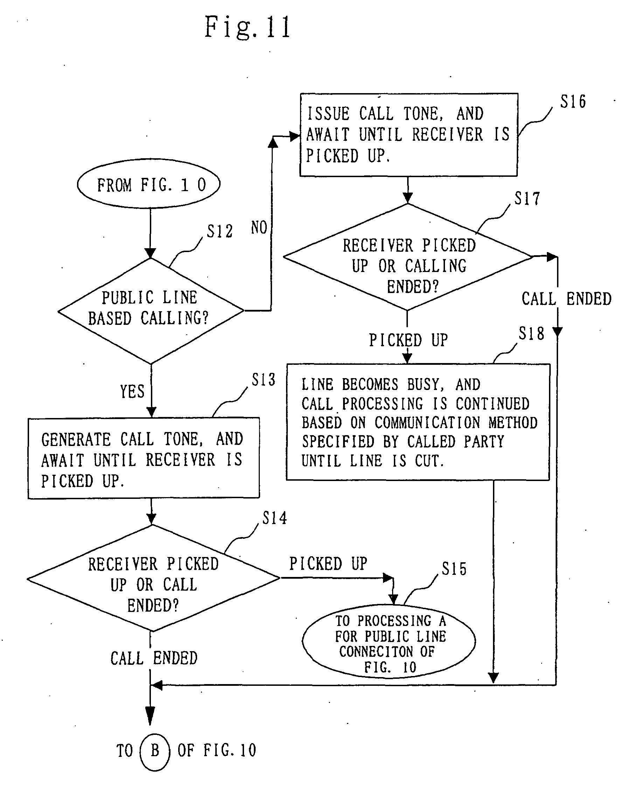

Now, a description will be given of an operation of the talking equipment adapter of Fig. 9 with reference to the flow charts of Fig. 10 and Fig. 11.

An overall processing of calling is the same as that discussed with reference to Fig. 4 and Fig. 5 in the first embodiment. (Processing in S10 through S30 of Fig. 4 and Fig. 5 is the same as that in S10 through S30 of Fig. 10 and Fig. 11.)

Processing of Figs. 10 and 11 different from that of Figs. 4 and 5 is additional processing explained below. If IP network based calling from the telephone set 10 is failed, the IP address is transmitted to the other party from the telephone set 10 when the line is cut if it is verified that the talking equipment adapter connected to the other party' s telephone set is of the same type. The same processing is added to both cases of making a call and receiving a call.

Firstly, with the former (in the case of making a call from the telephone set 10), after public line based calling is over (S25), the IP address learning section 400 instructs the line connection signal transmitting and receiving section 1100 to transmit a tone signal to the talking equipment adapter of the other party's telephone set through the public line 13 asking whether the talking equipment adapter is of the same type (S40). In the case where the talking equipment adapter of the other party's telephone set is not compatible with a talking equipment adapter having the configuration shown in Fig. 9 (S41), no response is to be transmitted from the talking equipment adapter connected to the other party's telephone set and therefore the processing is ended after a predetermined period of time. In the case where the talking equipment adapter of the receiving party's telephone set is of the same type (S41), a response will be transmitted about that from the talking equipment adapter connected to the other party's telephone set. Then, the IP address learning section 400 instructs the public line signal transmitting and receiving section 1100 to transmit its own IP address in the form of analog signal tone to the talking equipment adapter connected to the other party's telephone set (S42). Its own IP address may be stored together with its own phone number in the address translation table 302, and the public line signal transmitting and receiving section 1100 obtains the IP address corresponding to its own phone number with reference to the address translation table 302. Alternatively, the IP address learning section 400 may obtain the IP address corresponding to its own phone number with reference to the address translation table 302, and then sends the IP address obtained to the public line signal transmitting and receiving section 1100. Subsequently, the talking equipment adapter of the receiving party is asked to transmit its IP address, and the public line signal transmitting and receiving section 1100 receives the IP address. Then, the public line signal transmitting and receiving section 1100 sends the IP address received to the IP address learning section 400. The IP address learning section 400 stores the IP address received by making it correspond to the phone number of the other party's telephone set in the address translation table 302 (S43).

With the latter (in the case of receiving a call), when public line based calling is over (S30), a tone signal is transmitted from a talking equipment adapter for the telephone set of the other party or caller asking whether the talking equipment adapter is compatible with that of the caller. Then, the public line signal transmitting and receiving section 1100 receives the tone signal issued by the talking equipment adapter connected to the other party's telephone set, and transmits a tone signal in response within a predetermined period of time (S50). In the case of no tone signal of inquiry received from the other party's talking equipment adapter, the process goes back to S10. After transmitting the tone signal in response, the other party's IP address is to be transmitted from the other party's talking equipment adapter. The public line signal transmitting and receiving section 1100 receives the IP address transmitted, and transfers the IP address received to the IP address learning section 400. The IP address learning section 400 stores the other party's phone number and IP address made correspond to each other in the address translation table 302. The other party's phone number may be transmitted together with its IP address, and alternatively, the phone number of the other party's telephone set may be obtained upon reception of a call from the other party's telephone set, and stored temporarily in the public line signal transmitting and receiving section 1100 or the IP address learning section 400. Then, the IP address learning section 400 obtains the phone number of its own telephone set and an IP address corresponding to the phone number from the address translation table 302, and notifies the public line signal transmitting and receiving section 1100 of the phone number and the IP address. The public line signal transmitting and receiving section 1100 transmits the phone number and the IP address notified to the other,party's telephone set in the form of analog signal tone (S52). (The IP address may alternatively be notified alone.)

A description has been given of the example that the IP address is transmitted to each other between the communication equipment adapters by using tone signal. It is to be noted here that the tone signal is an individual single frequency signal corresponding to a numerical value from a single tone 1 to a single tone 10.

In addition, in the previous description, an IP address is to be mutually exchanged when a call is over. Alternatively, however, an IP address may be mutually exchanged immediately before starting a call (or immediately after the receiver is off the hook).

As aforementioned, the IP address learning section 400 is provided for notifying at the other party's phone number of the phone number of its own telephone set and the IP address corresponding to the phone number, or receiving an IP address corresponding to the phone number of the other party's telephone set, when public line based calling is over. As a result, the user is allowed to save work and labor to be done in advance such as checking the other party's IP address and setting the IP address in the address translation table 302.

According to the second embodiment, a description has been given of the talking equipment adapter which is characterized with the public line signal transmitting and receiving section 1100 and the IP address learning section IP address learning section 400. Specifically, the public line signal transmitting and receiving section 1100 mutually exchanges IP address information with the other party's telephone set connected to a talking equipment adapter of the same type or a talking equipment adapter compatible with the talking equipment adapter of this invention when the call is cut. The IP address learning section 400 stores current public line based phone numbers and IP addresses which are made correspond to each other. Thereby, the talking equipment adapter is also characterized by allowing an automatic calling over an IP network from the next calling onward.

### Embodiment 3.

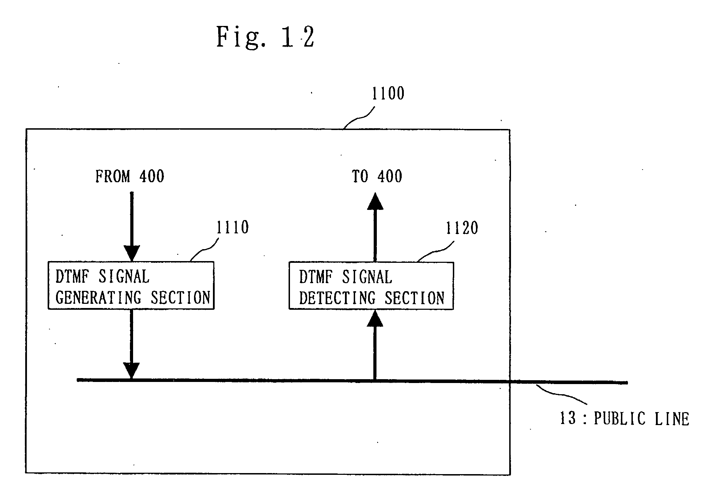

Previously, with reference to the previous figures, some constitutional examples have been discussed of the talking equipment adapter of this invention. Here, in Fig. 12, a diagram illustrating the internal configuration of a public line signal transmitting and receiving section 1100 according to a third embodiment is shown. The public line signal transmitting and receiving section 1100 of Fig. 12 is applicable itself to the public line signal transmitting and receiving sections discussed hereinbefore.

With referring to Fig. 12, a reference numeral 1110 denotes a DTMF (Dual Tone Multi-Frequency) signal generating section, which generates a DTMF signal, and transmits the DTMF signal through the public line 13. A reference numeral 1120 denotes a DTMF signal detecting section, which detects the DTMF signal received through the public line 13.

Now, an operation thereof will be discussed. Basic and overall procedures for calling are the same as those discussed in the first embodiment, and procedures for automatically transmitting the IP addresses of talking equipment adapters to each other between calling and called parties when initial public line based calling is over are the same as those discussed in the second embodiment. What is different from those embodiments is to use a DTMF signal for transmitting an IP address between talking equipment adapters according to this embodiment.

Processing will be explained with reference to Fig. 10 exclusively for what is different from that of the second embodiment.

Firstly, with processing in S40, the IP address learning section 400 instructs the public line signal transmitting and receiving section 1100 to transmit a tone signal through the public line 13 asking the talking equipment adapter of the other party's telephone set whether it is of the same type.

Alternatively, however, the tone signal may be replaced by the DTMF signal. In the case of using the DTMF signal, the DTMF signal generating section 1110 is to be used for transmission.

Next, in the case where the talking equipment adapter connected to the other party's telephone set is of the same type (S41), the talking equipment adapter notifies the other party's talking equipment adapter of its own IP address in the process of S42. With the processing in S42, the IP address learning section 400 first instructs the public line signal transmitting and receiving section 1100 to transmit its own IP address to the talking equipment adapter connected to the other party's telephone. Its own IP address may be stored in the address translation table 302 together with its own phone number. Then, the public line signal transmitting and receiving section 1100 may obtain an IP address corresponding to its own phone number with reference to the address translation table 302. Alternatively, however, the IP address learning section 400 may obtain an IP address corresponding to its own phone number with reference to the address translation table 302, and transfer the IP address obtained to the public line signal transmitting and receiving section 1100. The public line signal transmitting and receiving section 1100 translates address verification information including its own IP address to DTMF signal corresponding to numerical value through the DTMF signal generating section 1110, and transmits it to the other party's talking equipment adapter by way of the public line 13.

On the other hand, in S43, the other party's IP address transmitted from the talking equipment adapter of the receiving party is received. Address response information including the other party's IP address transmitted from the talking equipment adapter of the receiving party is of DTMF signal. This is received by the DTMF signal detecting section 1120 in the public line signal transmitting and receiving section 1100. The DTMF signal detecting section 1120 decodes the address response information received and obtains the other party's IP address. The other party's IP address obtained is sent to the IP address learning section 400. The IP address learning section 400 stores in the address translation table 302 the other party's IP address received which is made correspond to the phone number of the other party's telephone set.

Thus, the DTMF signal is used for transmitting the IP address information between the talking equipment adapters, which achieves a more reliable transmission of data than by using single tone. In addition to that, it is allowed to use such devices as a DTMF generating LSI and a DTMF detecting LSI which may be offered at a lower cost for telephoning. This may reduce the manufacturing cost of the equipment.

In the third embodiment, a description has been given of the talking equipment adapter which is characterized with the DTMF signal generating section 1110 and the DTMF signal detecting section DTMF signal detecting section 1120 which are provided in the public line signal transmitting and receiving section 1100. Thereby, the talking equipment adapter which is also characterized by using the DTMF signal as a signal representing an IP address for mutually transmitting IP address information.

### Embodiment 4.

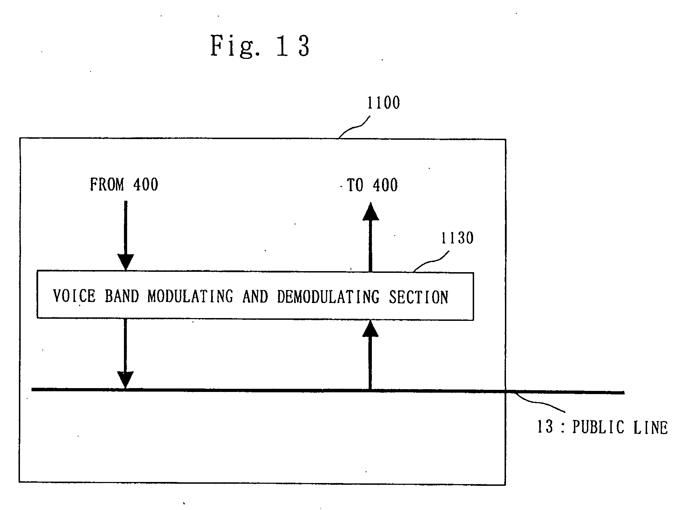

As a fourth embodiment, another embodiment of the internal configuration of the public line signal transmitting and receiving section public line signal transmitting and receiving section 1100 is shown in Fig. 13. The public line signal transmitting and receiving section 1100 of this embodiment may be replaced itself for the previous public line signal transmitting and receiving section discussed hereinbefore.

With referring to Fig. 13, a reference numeral 1130 denotes a voice band modulating and demodulating section, which has a function of modulating digital data to voice band modulating signal or a reverse function thereof.

Now, an operation thereof will be discussed. Basic and overall procedures for calling are the same as those discussed in the first embodiment, and procedures for automatically transmitting the IP addresses of talking equipment adapters to each other between calling and called parties when initial public line based calling is over are the same as those discussed in the second embodiment. What is different from those embodiments is to use a voice band data signal (hereinafter referred to as modem signal) for transmitting an IP address between talking equipment adapters according to this embodiment.

Processing will be explained with reference to Fig. 10 exclusively for what is different from that of the second embodiment.

Firstly, with processing in S40, the IP address learning section 400 instructs the public line signal transmitting and receiving section 1100 to transmit a tone signal through the public line 13 asking the talking equipment adapter of the other party's telephone set whether it is of the same type.

Alternatively, however, the tone signal may be replaced by the modem signal. In the case of using the DTMF signal, the voice band modulating and demodulating section 1130 is to be used for transmission.

Next, in the case where the talking equipment adapter connected to the other party's telephone set is of the same type (S41), the talking equipment adapter notifies the other party's talking equipment adapter of its own IP address in the process of S42. With the processing in S42, the IP address learning section 400 first instructs the public line signal transmitting and receiving section 1100 to transmit its own IP address to the talking equipment adapter connected to the other party's telephone. Its own IP address may be stored in the address translation table 302 together with its own phone number. Then, the public line signal transmitting and receiving section 1100 may obtain an IP address corresponding to its own phone number with reference to the address translation table 302. Alternatively, however, the IP address learning section 400 may obtain an IP address corresponding to its own phone number with reference to the address translation table 302, and transfer the IP address obtained to the public line signal transmitting and receiving section 1100. The public line signal transmitting and receiving section 1100 modulates address verification information including its own IP address to binary data (ASCII Code, etc.) (as a modem signal) corresponding to numerical value through the DTMF signal generating section 1110, and transmits it to the other party's talking equipment adapter by way of the public line 13.

On the other hand, in S43, the other party's IP address transmitted from the talking equipment adapter of the receiving party is received. Address response information including the other party's IP address transmitted from the talking equipment adapter of the receiving party is of modem signal. This is received by the voice band modulating and demodulating section 1130 in the public line signal transmitting and receiving section 1100. The voice band modulating and demodulating section 1130 obtains the binary data (IP address) corresponding to the numerical value, and transfers the IP address to the IP address learning section 400. The IP address learning section 400 stores in the address translation table 302 the other party's IP address received which is made correspond to the phone number of the other party's telephone set.

Thus, the modem signal is used for transmitting the IP address information between the talking equipment adapters, which achieves a more reliable transmission of data than by using single tone. In addition to that, it is allowed to use such a device as a modem LSI which is offered at a low price for telephone line. This may reduce the manufacturing cost of the equipment. In addition, the use of modem allows binary data such as ASCII Code to be transmitted. This allows such information as alphabet data and text data as well as numerical value to be transmitted. Also even the user's name and the maintenance and management information may be transmitted at the same time. Hence, the function of the equipment may be enhanced.

In the fourth embodiment, a description has been given of the talking equipment adapter which is characterized with the voice band modulating and demodulating section 1130 provided in the public line signal transmitting and receiving section 1100. Thereby, the talking equipment adapter which is also characterized by using the voice band data signal (modem signal) as a signal for data transmission in mutual transmission of such as IP address information.

### Embodiment 5.

With further reference to the first through fourth embodiments, call information received by the talking equipment adapter is outputted from a telephone set, as an example. Alternatively, however, the talking equipment should not be limited to the telephone set, but may be any equipment that allows call information to be inputted to the talking equipment, such as a personal computer, an information processing terminal and a cellular phone.

Still alternatively, the talking equipment adapter may be incorporated into the inside of the talking equipment so that it is formed integral with the talking equipment (part of talking equipment).

In addition, descriptions have been given by using public line (telephone line) as an example of analog communication line and IP network as an example of digital communication line. Alternatively, however, they may not always been used. For the analog communication line, any communication line for analog data communication (transmission) is applicable. Similarly, any communication line for digital data communication (transmission) is applicable as the digital communication line.

Therefore, the identification information, which is information designed for identifying a destination, may alternatively be any information recognizable on an analog communication line. Still alternatively, the address information, which is information designed for identifying a destination, may be any information recognizable on a digital communication line.

In addition, the DTMF signal and the voice band data signal (modem signal) are employed in the previous embodiments for mutually exchanging address verification information and the address response information between talking equipment adapters. Alternatively, however, any other signals may be employed in replacement of those.

### Embodiment 6.

The talking equipment adapters discussed in the pervious embodiments may be implemented by any one of hardware, firmware and software, or any combination thereof.

In addition, each function of the talking equipment adapter may be implemented by a program. The program may be executed by a computer. Further, the program may also be recorded in a storage medium. Program recorded in a recorded medium may be loaded to a computer and executed.

### Industrial Applicability

As aforementioned, the foregoing embodiments discussing examples of the talking equipment adapter of this invention have the following advantageous effects.

One of the advantageous effects is that IP network based calling is allowed whenever IP network based calling is available. Then, public line network based calling is allowed instead in case of IP network based calling unavailable in such cases that a phone number is not allowed to be translated into an IP address, the other party's talking equipment is not connected to the IP network, and the talking equipment adapter connected to the other party's talking equipment is not compatible with the transmitting party's talking equipment adapter.

Another advantageous effect is that the user is allowed to use his/her current phone number without change for IP network based calling.

Still another advantageous effect is that, in the case of call information received in the form of digital voice data over an IP network, the call information may be transmitted to the talking equipment in the form of analog voice data.

Still another advantageous effect that, in the case of call information received in the form of analog voice data from the talking equipment, the call information may be converted into digital voice data to be transmitted over an IP network.

In addition, it is designed that IP network based calling is allowed in the case where the other party's talking equipment, to which call information is to be transmitted, is applicable to IP network based calling, and to the contrary, public line based calling is allowed. Thus, both may be switched automatically. As a result, it is another advantageous effect that the caller may transmit and receive call information through either way of a public line and an IP network where appropriate.

In addition, the IP address learning section is provided for notifying the other party at the phone number of the phone number of the calling party and an IP address corresponding to the phone number, or receiving an IP address corresponding to the phone number of the other party's talking equipment when public line based calling is over. As a result, it is another advantageous effect that the caller is allowed to save labor such as checking the other party's IP address beforehand and setting it in the address translation table.

In addition, current public line based phone numbers and corresponding IP addresses are stored by making them correspond to each other. This has the advantageous effect that automatic IP network based calling is allowed from the next calling onward.

In addition, DTMF signal is used for mutually exchanging address verification information and address correspondence information between talking equipment adapters. This has the advantageous effect that a more reliable transmission of information is achieved than using single tone. Furthermore, this allows to use such a device as DTMF generating LSI and DTMF detecting LSI which is offered at a lower price. As a result, there is another advantageous effect that the production cost of the apparatus may be reduced.

Furthermore, voice band data signal (modem signal) is used for mutually exchanging address verification information and address correspondence information between talking equipment adapters. This has the advantageous effect that a more reliable transmission of information is achieved than using single tone. Furthermore, this allows to use a device such as a modem LSI which is offered at a lower price. As a result, there is another advantageous effect that the production cost of the apparatus may be reduced. In addition, the use of modem allows binary data such as Ascii Code to be transmitted. This allows such information as alphabet data and text data as well as numerical value to be transmitted. Then, even the user's name of a talking equipment adapter and the maintenance and management information of a talking equipment adapter may also be transmitted. Hence, another advantageous effect is that the functional capability may be enhanced.

## Claims

1. A talking equipment adapter, wherein the talking equipment adapter is connected to talking equipment, which receives call information for processing, and connects a digital communication line for transmitting digital data and an analog communication line for transmitting analog data, and
wherein the talking equipment adapter controls a use of one of the digital communication line and the analog communication line for transmitting the call information.

2. The talking equipment adapter according to claim 1, comprising:
a public line signal processing section, which receives the call information from the talking equipment at least,
a network communication processing section, which transmits the call information through the digital communication line,
a connected party determining section, which generates route selection information for selecting one of a route through the analog communication line and a route through the digital communication line, and
a line connection switching section, which receives the route selection information from the connected party determining section, and transmits the call information received from the public line signal processing section to one of the analog communication line and the network communication processing section based on the route selecting information.

3. The talking equipment adapter according to claim 2, wherein the call information includes identification information for identifying a destination;
wherein the network communication processing section specifies address information for identifying the destination of the call information, and transmits the call information through the digital communication line;
wherein the talking equipment adapter further comprises:
an address translation table, which stores the address information and the identification information which are made correspond to each other; and
an address translating section, which obtains the address information from the identification information with reference to the address translation table; and
wherein the connected party determining section generates the route selection information based on the address information in a case of having obtained the address information through the address translating section, and generates the route selection information based on the identification information in a case of failing to obtain the address information through the address translating section, and outputs the route selection information generated to the line connection switching section.

4. The talking equipment adapter according to claim 3, wherein the connected party determining section includes an address learning section, which determines whether the destination of the call information can receive the call information through the digital communication line in the case of failing to obtain the address information through the address translating section, and updates the address translation table based on a determined result.

5. The talking equipment adapter according to claim 4, wherein the public line signal processing section includes,
a DTMF signal generating section, which generates address verification information for obtaining the address information of the destination of the call information by using a Dual Tone Multi-Frequency (hereinafter referred to as "DTMF") signal, and
a DTMF signal detecting section, which receives a response to the address verification information transmitted from the DTMF signal generating section through the analog communication line as address response information using the DTMF signal, analyzes the address response information, and notifies the address learning section of an analyzed result, and
wherein the address learning section updates the address translation table based on details notified by the DTMF signal detecting section.

6. The talking equipment adapter according to claim 5, wherein the DTMF signal generating section transmits the address information corresponding to the identification information of the talking equipment of a party transmitting the call information to a destination which the call information is transmitted to by using the DTMF signal.

7. The talking equipment adapter according to claim 4, wherein the public line signal processing section includes a voice band modulating and demodulating section, which generates the address verification information for obtaining the address information of the destination of the call information by using a voice band data signal, and transmits it through the analog communication line, and also receives a response to the address verification information through the analog communication line as address response information using the voice band data signal, analyses the address response information, and notifies the address learning section of an analyzed result; and
wherein the address learning section updates the address translation table based on details notified by the voice band modulating and demodulating section.

8. The talking equipment adapter according to claim 7, wherein the voice band modulating and demodulating section transmits the address information corresponding to the identification information of the talking equipment of the party transmitting the call information to the destination which the call information is transmitted to by using the voice band data signal.

9. A talking equipment adapter, which is connected to an analog communication line for transmitting analog data by using identification information for identifying a destination and a digital communication line for transmitting digital data by using address information for identifying a destination, the talking equipment adapter comprising:
a public line signal processing section, which receives call information including the identification information and also transmits the analog data through the analog communication line;
a network communication processing section, which transmits the digital data through the digital communication line;
an address translation table, which stores the address information and the identification information which are made correspond to each other;
an address learning section, which obtains the address information of the destination by using the identification information included in the call information, and stores in the address translation table the address information obtained which is made correspond to the identification information:
a connected party determining section, which generates route selection information for selecting one of a route by way of the analog communication line and a route by way of the digital communication line with reference to the address translation table; and
a line connection switching section, which receives the route selection information from the connected party determining section, and outputs the call information to one of the network communication processing section and the network communication processing section based on the route selection information.

10. The talking equipment adapter according to claim 9, wherein the public line signal processing section generates address verification information for obtaining the address information of the destination of the call information and transmits the address verification information through the analog communication line, and also receives address response information including a response to the address verification information through the analog communication line, analyzes the address response information, and notifies the address learning section of an analyzed result, and
wherein the address learning section stores the analyzed result notified by the public line signal processing section in the address translation table.

11. The talking equipment adapter according to claim 10, wherein the public line signal processing section uses one of a Dual Tone Multi-Frequency signal and a voice band data signal.

12. An adapter talking apparatus, which is connected to an analog communication line for transmitting analog data by using identification information for identifying a destination and a digital communication line for transmitting digital data by using address information for identifying a destination, the adapter talking apparatus comprising:
means for receiving call information including the identification information;
means for obtaining the address information corresponding to the identification information included in the call information through the analog communication line;
means for storing an obtained result of the analog information which is made correspond to the identification information in a storage area; and
means for selecting one of the digital communication line and the analog communication line with reference to the storage area and transmitting the call information.

13. The talking equipment adapter according to claim 12, wherein the means for obtaining the address information generates address verification information for obtaining address information by using a predetermined signal, and transmits the address verification information generated.

14. A line connection method for transmitting call information through one of an analog communication line for transmitting analog data by using identification information for identifying a destination and a digital communication line for transmitting digital data by using address information for identifying a destination, the line connection method comprising:
receiving the call information including the identification information;
obtaining the address information corresponding to the identification information included in the call information through the analog communication line;
storing an obtained result of the analog information which is made correspond to the identification information in a storage area; and
selecting one of the digital communication line and the analog communication line with reference to the storage area and transmitting the call information.

15. A line connection program for transmitting call information through one of an analog communication line for transmitting analog data by using identification information for identifying a destination and a digital communication line for transmitting digital data by using address information for identifying a destination, the line connection program causing a computer to execute:
receiving process of the call information including the identification information;
obtaining process of the address information corresponding to the identification information included in the call information;
storing process of an obtained result of the analog information which is made correspond to the identification information in a storage area; and
selecting process of one of the digital communication line and the analog communication line with reference to the storage area for transmitting the call information.

16. A computer readable storage medium having a line connection program recorded, the line connection program for transmitting call information through one of an analog communication line for transmitting analog data by using identification information for identifying a destination and a digital communication line for transmitting digital data by using address information for identifying a destination, wherein the line connection program causes a computer to execute:
receiving process of the call information including the identification information;
obtaining process of the address information corresponding to the identification information included in the call information;
storing process of an obtained result of the analog information which is made correspond to the identification information in a storage area; and
selecting process of one of the digital communication line and the analog communication line with reference to the storage area for transmitting the call information.
